# EUROPEAN PATENT APPLICATION

(11) **EP 0 952 129 A1**
(43) Date of publication of application: **27.10.1999**
(21) Application number: 98942688.7
(22) Date of filing: 10.09.1998
(51) Int. Cl.: C05F 3/00, C05F 3/06

(54) **METHOD FOR OBTAINING ORGANIC FERTILIZER FROM ANY TYPE OF ANIMAL EXCREMENTS**

(30) Priority: 22.10.1997 ES 9702180
(71) Applicant: Zamorano Navarro, Manuel, 50830 Villanueva de Gallego (ES)
(72) Inventor: Zamorano Navarro, Manuel, 50830 Villanueva de Gallego (ES)
(74) Representative: Ungria Lopez, Javier
(86) International application number: ES9800247
(87) International publication number: WO9920580

(57) **Abstract**

Process for obtaining organic fertilizer from any type of animal excrement, whether it be ovine, porcine, bovine, poultry excrement and in general any type of animal excrement which has normally a high percentage of humidity, evaluated at 90%, and which is stored in "pools", the process using a rotary horizontal airdehydrator (1) wherein the product to be dehydrated is introduced from a homogenizer (2) wherein the product is uniformly prepared, bringing heat inside the horizontal rotary dehydrator and providing means for the storage and treatment of the dehydrated product for its aerobic fermentation.

## Description

### OBJECT OF THE INVENTION

As expressed in the title of the present specification, the following invention consists of a method for obtaining organic fertilizer from any type of animal excrements, in such a way that by means of the proposed method, the time for obtaining the organic fertilizer is drastically reduced with the added advantage of obtaining an organic fertilizer of higher quality than the fertilizer obtained by conventional means.

The method is essentially based on carrying out rapid dehydration of the product coming from some "pools" in which the product is stored, in such a way that prior to passing to the rotary horizontal aero-dehydrator the product is homogenized with other organic products.

So that said operation is effective the installation includes an electric cogeneration plant of gas motors, for the purpose of introducing hot air through one of the bases of the rotary horizontal dehydrator that causes high evaporation, and allows the obtainment of a totally inert product.

Once the rapid dehydration has been produced, the product is led to a composting shed, wherein aerobic fermentation of the product is achieved. The product is subjected to a room temperature and a relative humidity of approximately 50°C and 40%, respectively.

The product stored in the composting shed is tumbled continuously by a "rotomix" type tumbling apparatus, for the purpose of preventing a possible anaerobic fermentation that produces toxic gases and besides it permits uniform fermentation to be achieved.

### TECHNICAL FIELD

The method for obtaining organic fertilizer from all types of animal excrement is applicable in all those industries that manufacture organic fertilizer, as well as in all types of farms for recycling excrements produced by the animals existing on the farm, this representing a great advantage upon proving to be an economic method, for the selling as well as use thereof. It likewise proves to be an outstanding environmental improvement.

### BACKGROUND OF THE INVENTION

Conventionally, on farms and in general, in all livestock farms, there is a straw bed on which the animal excrements fall, the enclosure being cleaned when it is considered that there is an excess accumulation of filth, in such a way that all the removed product, that is to say the straw along with the excrements, is accumulated and periodically it is tumbled by hand for the purpose of achieving aerobic fermentation. Hence, the product remains in the open air and the water is eliminated by the action of the sun.

After a considerably long period of time has gone by, the product is used as fertilizer, for which purpose it is taken out to the fields and spread over the same.

Normally, the removed product does not contain excess humidity but with the passing of time the way to keep farms clean has evolved and thus the ground of the same has been conditioned and provided with drains to facilitate cleaning by spraying pressurized water that sweeps the excrements whereby a product with a very high humidity is obtained, in such a way that the evaporation of the water by natural means, is difficult due to the long periods of time required, to which one must add the inclemencies of the weather upon being in the open air.

### DESCRIPTION OF THE INVENTION

The present specification describes a method for obtaining an organic fertilizer from all types of animal excrement, in such a way that it may be ovine, porcine, bovine, avian excrement, and in general any type of animal excrement that normally has a high percentage of humidity, assessable in 90%, which is stored in "pools", the method being constituted by an installation that includes a rotary horizontal dehydrator in which the product to be dehydrated is introduced from a homogeneizer in which it is mixed with other organic products, which may be part of the product itself already dehydrated, in order to give it texture or enrich it with other fertilizing compounds, always organic, in accordance with the qualities of the fertilizer that is to be obtained, means to provide heat to the inside of the rotary horizontal dehydrator, and storage and treatment means of the dehydrated product for aerobic fermentation thereof.

The means to provide heat to the inside of the rotary horizontal dehydrator are defined by an electric cogeneration plant of gas motors, in such a way that the feed of hot air is produced in relation to the insertion base of the product to be dehydrated, thus being subjected to pasteurization whereby a totally inert product is obtained.

The storage and treatment means of the dehydrated product for aerobic fermentation thereof, are defined by a shed in which the dehydrated product is introduced for a period of approximately 5 weeks, being continuously tumbled by a "rotomix" type tumbling apparatus and subjected to some conditions of room temperature and relative humidity of approximately 50°C and 40% respectively, in such a way that the time for obtaining the organic fertilizer is drastically reduced and besides the fertilizer has a higher quality than fertilizer obtained by conventional means.

In order to complete the description that is going to be made hereinafter, and for the purpose of providing a better understanding of the characteristics of the invention, the present specification is accompanied by a drawing in whose single figure, the most characteristic features of the invention are represented in an illustrative and non-restrictive manner.

### BRIEF DESCRIPTION OF THE DRAWINGS

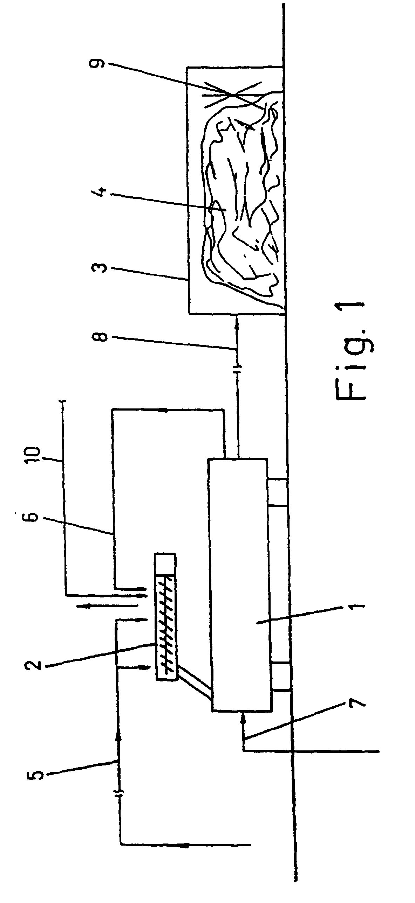

Figure 1 shows a schematic view of the method for obtaining the organic fertilizer in which the basic component elements of the installation are observed, such as the rotary horizontal dehydrator to which through one of its bases hot air is caused to penetrate, and in which the initial product previously homogenized with other organic products is introduced in order to give it texture, or the desired characteristics of the fertilizer to be obtained, the dehydrated product being led towards an aerobic fermentation shed.

### DESCRIPTION OF A PREFERRED EMBODIMENT

In view of the commented figure and in accordance with the adopted numbers, we can see how the installation in order to carry out the method for obtaining organic fertilizer is based on a rotary horizontal dehydrator (1) where the rapid dehydration of the product coming from a homogenizer (2) is produced, the product stored in the corresponding "pools" being led to the homogenizer, as well as part of the product coming out of the rotary horizontal dehydrator, and/or other organic products, introduced by a feeder (10), while the rest of the product (4) coming out of the same is led to a shed (3).

If we observe the sole figure of the drawings we see how the feed (5) of the product to be dehydrated coming from the storage "pool" to the homogenizer (2) is produced. The feed (6) of part of the dehydrated product and/or the feed (10) of other organic products to the homogenizer also takes place, in order to give texture to the initial product provided with a very high humidity, as well as the desired qualities to the fertilizer to be prepared.

Hence, the initial product has a humidity of approximately 90% while the dehydrated product, recirculated to the mixer (2), has a humidity of approximately 30%.

In order for the method to be economically feasible, the installation includes an electric cogeneration plant of gas motors in order to lead through a duct (7) hot air to the base of the rotary horizontal dehydrator through which the product to be dehydrated is introduced from the homogenizer (2).

Just as we have indicated, part of the dehydrated product may be led to the homogenizer (2) in order to be mixed with the initial feed product, while the rest of the dehydrated product (4) is led through the line (8) to the storage and treatment shed (3).

Likewise, the homogenizer (2) can be fed by means of the feeder (10), by the organic product necessary to give it at the end the desired characteristics.

Aerobic fermentation of the product is achieved in the composting shed (3) upon being subjected to a room temperature of approximately 50°C and a relative humidity of approximately 40%.

After a period of approximately 5 weeks, the organic fertilizer with the desired characteristics is obtained, for which in the composting process the product is automatically and continuously tumbled by means of a "rotomix" type tumbling apparatus (9) in order to prevent a possible anaerobic fermentation, thus avoiding the production of toxic gases such as methane, gases which on the other hand due to their high cost of filtering and refining, utilization thereof is not economically profitable.

Finally, the obtained organic fertilizer will have to be delivered in bulk form or pelleted and in sacks, the same having a higher quality than conventional fertilizer, given that upon being submitted in the rotary horizontal dehydrator (1) to a high heat source, it is pasteurized and hence the product is totally inert.

## Claims

1. Method for obtaining organic fertilizer from any type of animal excrements, in such a way that it may be ovine, porcine, bovine, avian excrement and in general any type of animal excrement that normally has a high percentage of humidity, assessable in 90%, which is stored in "pools", characterized in that the method comprises a rotary horizontal dehydrator (1), to which the product to be dehydrated is introduced, from a homogenizer (2) in which it is mixed with the already dehydrated product and/or other organic products by means of the feeder (10), in order to give it texture and the desired characteristics, means to provide heat to the inside of the rotary horizontal dehydrator and storage and treatment means of the dehydrated product for aerobic fermentation thereof.

2. Method for obtaining organic fertilizer from all types of animal excrements, according to claim 1, characterized in that the means to provide heat to the inside of the rotary horizontal dehydrator (1) are defined by an electric cogeneration plant of gas motors, in such a way that the feed (7) of hot air is done in relation to the base of introduction of the product to be dehydrated, which is thus subjected to pasteurization.

3. Method for obtaining organic fertilizer from any type of animal excrements, according to claim 1, characterized in that the storage and treatment means of the dehydrated product (4) for aerobic fermentation thereof are defined by a shed (3) in which the dehydrated product (4) is introduced for a period of approximately 5 weeks, being continuously tumbled by an automatic tumbling apparatus (9) and subjected to a room temperature and relative humidity of approximately 50°C and 40%, respectively, obtaining a homogeneous aerobic fermentation.
